# EUROPÄISCHE PATENTANMELDUNG

(11) **EP 2 891 752 A1**
(43) Veröffentlichungstag der Anmeldung: **08.07.2015**
(21) Anmeldenummer: 14198871.7
(22) Anmeldetag: 18.12.2014
(51) Int. Cl.: E04B 1/90, E01F 8/00, C04B 28/02

(54) **Formkörper aus einem Leichtwerkstoff sowie Verfahren zu dessen Herstellung und Verwendung**

(30) Priorität: 20.12.2013 DE 102013226861
(71) Anmelder: Fraunhofer Gesellschaft zur Förderung der angewandten Forschung e.V., 80686 München (DE)
(72) Erfinder: Steiner-Enk, Barbara, 6342 Niederndorf (AT); Karlstetter, Christof, 85604 Zorneding (DE); Wack, Roman, 70372 Stuttgart (DE); Drotleff, Horst, 70374 Stuttgart (DE); Seldbauer, Klaus, 83700 Rottach-Egern (DE); Breuer, Klaus, 83229 Aschau (DE); Zolanvari, Seyed, 83626 Valley (DE)
(74) Vertreter: Andrae | Westendorp Patentanwälte Partnerschaft

(57) **Zusammenfassung**

Die Erfindung betrifft einen Formkörper (1) aus einem Leichtwerkstoff, enthaltend zumindest eine Gesteinskörnung (10) und ein Bindemittel (20), wobei das Bindemittel (20) Hydrationsprodukte zumindest eines Zementes enthält, der Formkörper eine Korneigenporigkeit und/oder eine Haufwerksporigkeit aufweist und der Formkörper einen Schallabsorptionsgrad (α) nach ISO 10534-2:1998 von etwa 0,1 bis etwa 0,7 aufweist. Weiterhin betrifft die Erfindung ein Verfahren zur Herstellung eines Formkörpers enthaltend die folgenden Schritte: Herstellen (51) einer Trockenmischung durch Mischen von zumindest einer Gesteinskörnung (10) und Zement, Zugeben (52) von Wasser zur Trockenmischung, Einfüllen (53) der erhaltenen Mischung in zumindest eine Form, Einrütteln und/oder axiales oder isostatisches Pressen der Mischung in der Form, hydraulisches (54) Abhärten des Zementes, so dass ein Formkörper mit einer Korneigenporigkeit und/oder einer Haufwerksporigkeit entsteht.

## Beschreibung

Die Erfindung betrifft einen Formkörper aus einem Leichtwerkstoff und ein Verfahren zu seiner Herstellung, wobei der Formkörper zumindest eine Gesteinskörnung und ein Bindemittel enthält. Formkörper der eingangs genannten Art können als Schall- oder als Wärmeisolation verwendet werden.

Aus der EP 0 290 881 A2 ist bekannt, ein Leichtbauelement in Plattenform herzustellen, bei welchem offenporige Blähglaskugeln mit einem Epoxidbindemittel verbunden werden. Je nach Anwendungszweck kann das Leichtbauelement mit dünnen Schichten aus Glasgewebe, Naturstein, Aluminiumfolie, Glas oder Kunststoff beschichtet werden.

Diese bekannten Leichtbauelemente weisen jedoch den Nachteil auf, dass im Brandfall giftige Dämpfe aus dem Epoxidharz entstehen können. Unter großer thermischer Last kann das Harz schmelzen und bei der Anwendung als Deckenverkleidung von der Decke tropfen, so dass Verbrennungsgefahr für aus dem Gebäude flüchtende Personen besteht. Weiterhin können bei der Herstellung der bekannten Leichtbauelemente Lösungsmittel in den Platten zurückbleiben, welche an die Raumluft abgegeben werden und dort gesundheitsschädlich wirken. Die für die Herstellung Epoxidharz-gebundener Elemente verwendeten Härter können Bisphenole oder Amine enthalten, welche ebenfalls in die Raumluft abgegeben werden können und dort toxisch auf Organismen im Raum wirken.

Ausgehend von diesem Stand der Technik liegt der Erfindung somit die Aufgabe zugrunde, einen Formkörper aus einem Leichtwerkstoff und ein Verfahren zu seiner Herstellung anzugeben, welcher unbrennbar ist und keine toxischen Substanzen in die Raumluft abgibt. Der Formkörper soll die Anforderungen eines Schallabsorbers erfüllen und die gängigen bauphysikalischen Anforderungen an Druck- und Zugfestigkeiten, Wasser- und Säurebeständigkeit erfüllen

Die Aufgabe wird erfindungsgemäß durch einen Formkörper gemäß Anspruch 1, ein Verfahren gemäß Anspruch 12 und eine Verwendung gemäß Anspruch 15 gelöst.

Erfindungsgemäß wird ein Formkörper vorgeschlagen, welcher zumindest eine Gesteinskörnung und ein Bindemittel enthält. Die zumindest eine Gesteinskörnung sorgt dabei für die erforderliche Druckfestigkeit des Leichtwerkstoffes, wobei das Bindemittel den Verbund zwischen den einzelnen Körnern der Gesteinskörnung vermittelt und dadurch die Basiszugfestigkeit bereitstellt. Die Zugfestigkeit kann durch eine zusätzlich eingebrachte oder aufgebrachte Armierung verstärkt werden.

Die Gesteinskörnung kann ein Granulat vorgebbarer Korngröße bzw. mit einer vorgebbaren Korngrößenverteilung enthalten. Das Granulat kann einen anorganischen Festkörper enthalten. Die einzelnen Körner des Granulates können selbst porös sein, d.h. eine Korneigenporigkeit aufweisen.

Erfindungsgemäß wird vorgeschlagen, dass das Bindemittel einen hydraulisch abbindenden Zement enthält oder daraus besteht. In unterschiedlichen Ausführungsformen der Erfindung können unterschiedliche Zemente verwendet werden, beispielsweise Hochofenzement, Portlandzement oder Trasszement. Fallweise kann auch eine Mischung unterschiedlicher Zemente eingesetzt werden. Hierdurch wird die Verwendung organischer toxischer Substanzen vermieden. Da zementbasierte Baustoffe weit verbreitet sind, beispielsweise als Innenputz, als Betonbauteil oder als Mörtel, kann der vorgeschlagene Formkörper in einfacher Weise in bestehende Baukörper integriert werden, entweder als tragendes oder als nicht tragendes Element.

Das Bindemittel und/oder der Formkörper kann in einigen Ausführungsformen der Erfindung zudem Zusatzmittel und/oder Zusatzstoffe enthalten.

Zusatzstoffe können flüssige, pulverförmige oder granulatartige Stoffe sein, welche dem Bindemittel bei der Herstellung zugegeben werden, um durch chemische und/oder physikalische Wirkung Eigenschaften des Bindemittels - wie z. B. Verarbeitbarkeit, Erstarren, Erhärten oder Frostwiderstand - zu verändern. In einigen Ausführungsformen der Erfindung kann zumindest ein Zusatzstoff ausgewählt sein aus einem Schaumbildner, einem Porenbildner, einem Verzögerer, einem Fließverbesserer und/oder einem Beschleuniger.

Die Herstellung des vorgeschlagenen Formkörpers kann in einfacher Weise dadurch erfolgen, dass die zumindest eine Gesteinskörnung und zumindest ein Zement in einem vorgebbaren Mischungsverhältnis trocken vermischt werden. Danach kann eine vorab bestimmte Wassermenge zu dieser Trockenmischung zugefügt werden. Schließlich kann die erhaltene Mischung in zumindest eine Form eingefüllt werden, woraufhin der Zement hydraulisch aushärtet. Das Bindersystem des erfindungsgemäßen Formkörpers enthält somit zumindest das Bindemittel und Wasser. Nach der Herstellung des Formkörpers enthält dieser zumindest die Hydrationsprodukte des Zementes und Zuschlagstoffe.

In Abhängigkeit der gewählten Form kann der Formkörper die Form eines Hohlblocksteines, eines Massivsteines oder die Form einer Platte annehmen. In einigen Ausführungsformen der Erfindung kann der erfindungsgemäße Formkörper einen gegenüber anderen Baustoffen reduzierten Wärmedurchgangswert oder eine verbesserte Schallabsorption aufweisen. In einigen Ausführungsformen der Erfindung ist der vorgeschlagene Formkörper daher als Schallabsorber in Innenräumen von Gebäuden, Fahrzeugen, Schiffen oder Flugzeugen einsetzbar, um Schallpegel oder Nachhallzeiten in zumindest einigen Frequenzbändern zu reduzieren. Hierdurch kann das Wohlbefinden von Personen, welche sich in diesem Innenraum aufhalten, verbessert werden.

In einigen Ausführungsformen der Erfindung beträgt der Schallabsorptionsgrad α etwa 0,1 bis etwa 0,7. In anderen Ausführungsformen der Erfindung beträgt der Schallabsorptionsgrad α etwa 0,3 bis etwa 0,6. In wiederum anderen Ausführungsformen der Erfindung beträgt der Schallabsorptionsgrad α etwa 0,2 bis etwa 0,4. In weiteren Ausführungsformen der Erfindung beträgt der Schallabsorptionsgrad α etwa 0,1 bis etwa 0,5 oder der Schallabsorptionsgrad α beträgt etwa 0,1 bis etwa 0,8. In einigen Ausführungsformen der Erfindung ist der Schallabsorptionsgrad α geringer als etwa 0,8. Für die Zwecke der vorliegenden Beschreibung bezeichnet der Schallabsorptionsgrad einen Wert, welcher nach ISO 10534-2:1998 bestimmt wurde. Dies bedeutet, dass bei senkrechtem Schalleinfall α = 1 - |r|² mit dem Schallreflexionsfaktor r als komplexes Verhältnis der Amplitude der reflektierten Welle zur einfallenden Welle in der Bezugsebene bei einer ebenen Welle mit senkrechtem Einfall und bei einem Einbau des Formkörpers vor schallhartem Abschluss ohne rückseitiges Luftvolumen. Der Schallabsorptionsgrad (α) kann an einem einschichtigen Aufbau des Formkörpers bestimmt werden.

Der Schallabsorptionsgrad kann in einigen Ausführungsformen der Erfindung von der Frequenz der eingestrahlten Schallwelle abhängen. Der angegebene Schallabsorptionsgrad von etwa 0,1 bis etwa 0,7 wird somit zumindest bei einer vorgebbaren Frequenz oder in einem Frequenzband vorgebbarer Breite erreicht. Die Frequenz bzw. das Frequenzband kann in einigen Ausführungsformen der Erfindung aus dem Bereich von 500 Hz bis 1,5 kHz ausgewählt sein.

In einigen Ausführungsformen der Erfindung kann die Gesteinskörnung einen offenporigen anorganischen Festkörper enthalten. Eine offenporige Gesteinskörnung kann dazu führen, dass der entstehende Formkörper eine Haufwerksporigkeit, eine Korneigenporigkeit oder eine kombinierte Korneigen- und Haufwerksporigkeit aufweist. Durch die Wahl der Gesteinskörnung, der Zementmenge und -qualität sowie der Verdichtung in der Form kann somit das Schallabsorptions- und -reflexionsverhalten an vorgebbare Anwendungsfälle angepasst werden.

In einigen Ausführungsformen der Erfindung kann die Gesteinskörnung eine Korngröße von etwa 0,1 mm bis etwa 20,0 mm oder etwa 0,1 mm bis etwa 8 mm aufweisen. In einigen Ausführungsformen der Erfindung kann die Gesteinskörnung eine Korngröße von etwa 0,1 mm bis etwa 4 mm oder etwa 0,5 bis etwa 2,5 mm aufweisen. In anderen Ausführungsformen der Erfindung kann die Gesteinskörnung eine Korngröße von etwa 1 mm bis etwa 2 mm aufweisen. Eine Gesteinskörnung im genannten Korngrößenbereich führt zu einem Formkörper mit einem spezifischen Strömungswiderstand, welcher einerseits das Eindringen einer Schallwelle in den Formkörper erlaubt, so dass der Schall nicht großteils reflektiert wird und andererseits nicht dazu führt, dass der Schall den Formkörper nahezu ungebremst durchdringt und an einer dahinter befindlichen Fläche reflektiert wird. Die erfindungsgemäß vorgeschlagene Korngröße kann beispielsweise durch Trockensiebung oder Nasssiebung nach DIN 18123-4 bestimmt werden.

In einigen Ausführungsformen der Erfindung kann die Gesteinskörnung Blähglas und/oder Perlit und/oder Bims und/oder Schaumlava und/oder Blähschiefer und/oder Mineralschaum und/oder Blähton und/oder geschäumte Silicate und/oder Kieselgur enthalten oder daraus bestehen. Eine solche Gesteinskörnung ist offenporig bzw. weist eine Korneigenporigkeit auf, d.h. an der Oberfläche einzelner Körner sind offene Poren vorhanden, welche in das Innere des Korns hineinreichen. Hierdurch kann eine Schallwelle eindringen und absorbiert werden, d.h. in Wärme umgewandelt werden. Weiterhin können diese Gesteinskörnungen besonders gut mit hydraulisch abbindendem Zement zu einem druck- und zugstabilen Formkörper zusammengefügt werden.

In einigen Ausführungsformen der Erfindung kann die Oberfläche der Gesteinskörnung zu etwa 1 % bis etwa 90 % mit Bindemittel bedeckt sein. In einigen Ausführungsformen der Erfindung kann die Oberfläche des Zuschlagstoffes zu etwa 10 % bis etwa 50 % mit Bindemittel bedeckt sein. In einigen Ausführungsformen der Erfindung kann die Oberfläche des Zuschlagstoffes zu etwa 15 % bis etwa 30 % mit Bindemittel bedeckt sein. Hierdurch ergibt sich einerseits eine hinreichende Festigkeit des Formkörpers und andrerseits bleibt die Korneigenporigkeit der Gesteinskörnung weiterhin akustisch wirksam.

In einigen Ausführungsformen der Erfindung kann der Formkörper eine zusätzliche Armierung aufweisen. Diese kann die Zugfestigkeit des Formkörpers verbessern. In einigen Ausführungsformen der Erfindung kann die Armierung Kunststofffasern, Glasfasern, Kohlenstofffasern, Aramidfasern oder Stahl enthalten. Die Armierung kann während des Fertigungsprozesses in die Form eingelegt werden oder nach dem hydraulischen Abbinden des Zementes vollflächig mit dem Formkörper auf zumindest einer Seite verklebt werden. In einigen Ausführungsformen der Erfindung können auch zumindest zwei Formkörper mit oder ohne eingebrachter Armierung mit einer Armierungslage verklebt werden. Die Armierung kann in einigen Ausführungsformen der Erfindung als Gelege oder als Geflecht in den Formkörper eingebracht werden.

In einigen Ausführungsformen der Erfindung kann die Mischung aus Gesteinskörnung, Zement und Wasser in die Form eingerüttelt und/oder in der Form axial oder isostatisch gepresst werden. Hierdurch lässt sich der Füllungsgrad der Form und damit die Porigkeit des entstehenden Formkörpers in weiten Grenzen beeinflussen.

In einigen Ausführungsformen der Erfindung kann das Material verdichtet werden. Diese Verdichtung kann die Materialfestigkeiten verbessern und/oder die Schallabsorptionseigenschaften beeinflussen.

In einigen Ausführungsformen der Erfindung kann der Pressdruck zwischen etwa 0,15 MPa und etwa 0,3 MPa betragen. Ein solcher Pressdruck führt zu einem auf makroskopischer Ebene homogenen Material ohne Lunker und Fehlstellen, welches jedoch die für eine Schallabsorption notwendige Porigkeit aufweist.

In einigen Ausführungsformen der Erfindung kann der vorgeschlagene Formkörper eine Dichte von etwa 100 kg/m³ bis etwa 800 kg/m³ aufweisen. In einigen Ausführungsformen der Erfindung kann der vorgeschlagene Formkörper eine Dichte von etwa 150 kg/m³ bis etwa 700 kg/m³ oder von etwa 350 kg/m³ bis etwa 500 kg/m³ aufweisen. Durch die geringe Dichte ist ein einfacher Transport und eine einfache Verarbeitbarkeit des Formkörpers am Ort der letzten Verwendung und ein universeller Einsatz auch in bewegten Räumen möglich, wie in Fahrzeugen oder Aufzugkabinen. Weiterhin weist ein Formkörper im genannten Dichtebereich eine Porosität auf, welche die Verwendung des Formkörpers zur Schall- und/oder Wärmeisolation vorteilhaft ermöglicht.

In einigen Ausführungsformen der Erfindung beträgt die Druckfestigkeit des Formkörpers etwa 0,1 MPa bis etwa 5 MPa, insbesondere etwa 0,2 MPa bis etwa 3 MPa. Diese Druckfestigkeiten werden nach DIN 196-1 ermittelt. Die genannten Druckfestigkeiten erlauben den Einsatz des Formkörpers auch als tragendes Element in Gebäuden, so dass eine zusätzliche Beton- oder Ziegelwand entfallen kann. Da in diesem Fall die tragende Gebäudehülle und der Schall- und Wärmeschutz in einem einzigen Element verwirklicht wird, kann der Herstellungsaufwand des Gebäudes reduziert werden.

In einigen Ausführungsformen der Erfindung beträgt der Anteil der Gesteinskörnung etwa 30 bis etwa 80 Gew.-% und der Anteil des Bindemittels etwa 70 bis etwa 20 Gew.-%. In einigen Ausführungsformen der Erfindung beträgt der Anteil der Gesteinskörnung (10) etwa 50 bis etwa 80 Gew.-% und der Anteil des Bindersystems etwa 50 bis etwa 20 Gew.-%. In weiteren Ausführungsformen der Erfindung beträgt der Anteil der Gesteinskörnung (10) etwa 70 bis etwa 90 Gew.-% und der Anteil des Bindersystems etwa 30 bis etwa 10 Gew.-%. Die genannten Mengenverhältnisse führen zu vorteilhaften Eigenschaften des Formkörpers, insbesondere einer hohen Druckfestigkeit, einer niedrigen Dichte und einer hohen Porosität mit einem spezifischen Strömungswiderstand, welcher den Formkörper zur Schall- und/oder Wärmeisolation einsetzbar macht.

Um den Zement zum hydraulischen Abbinden zu bringen, kann das Wasser-/Zementverhältnis in einigen Ausführungsformen der Erfindung etwa 0,3 bis etwa 1,5 oder etwa 0,35 bis etwa 0,45 betragen. In einigen Ausführungsformen der Erfindung kann das Wasser-/Zementverhältnis etwa 0,8 bis etwa 1,1 betragen. Dies führt einerseits zur möglichst vollständigen Aushärtung des Zementes und andererseits zu einem geringen Wassergehalt des Formkörpers, so dass ein zusätzlicher Trocknungsschritt entfallen kann, da das zugeführte Wasser vollständig mit dem Zement umgesetzt wurde. Hierdurch entsteht nach dem hydraulischen Abbinden des Zementes sofort ein Formkörper, welcher unmittelbar weiter verarbeitet werden kann.

Nachfolgend soll die Erfindung anhand von Ausführungsbeispielen und Figuren ohne Beschränkung des allgemeinen Erfindungsgedankens näher erläutert werden. Dabei zeigt:
- Figur 1: eine schematische Darstellung eines Formkörpers mit Haufwerksporigkeit.
- Figur 2: zeigt eine schematische Darstellung eines Formkörpers mit Korneigenporigkeit.
- Figur 3: zeigt eine schematische Eigenschaft eines Formkörpers mit Korneigen- und Haufwerksporigkeit.
- Figur 4: zeigt ein Flussdiagramm des erfindungsgemäß vorgeschlagenen Verfahrens.

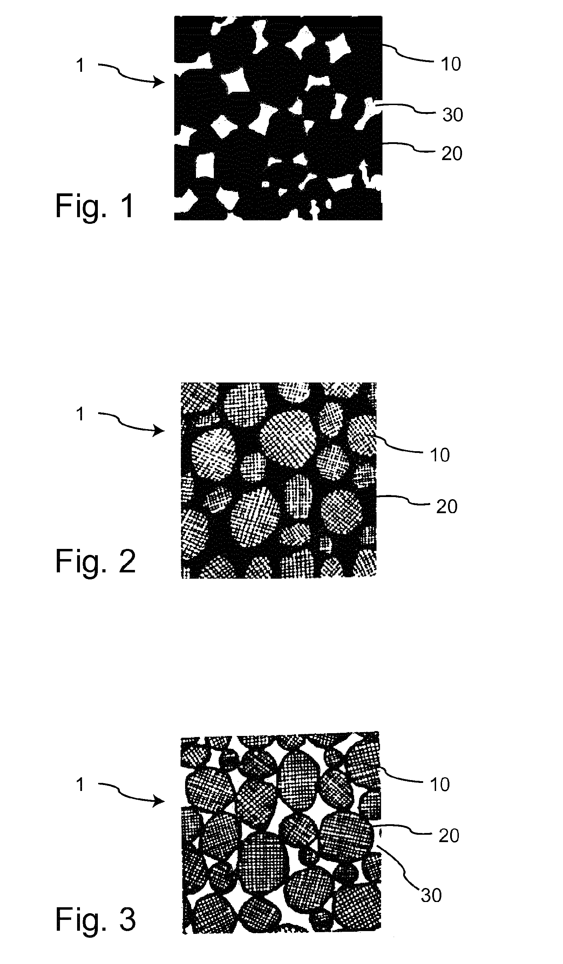

Figur 1 zeigt schematisch einen Querschnitt durch einen Formkörper 1. Der Formkörper 1 enthält zumindest eine Gesteinskörnung 10. Die Gesteinskörnung kann einen offenporigen, anorganischen Festkörper enthalten und eine Korngröße von etwa 0,1 mm bis etwa 4 mm aufweisen. In einigen Ausführungsformen der Erfindung können Gesteinskörnungen unterschiedlicher Korngröße in vorgebbarem Mischungsverhältnis miteinander gemischt werden, um die Festigkeit und/oder die Porosität des Formkörpers 1 an vorgebbare Sollwerte anzupassen.

Die Gesteinskörnung 10 ist mit einem Bindemittel 20 versehen, welches die einzelnen Körner der Gesteinskörnung miteinander verbindet, so dass der Formkörper 1 als zug- und druckfester Körper mit dazwischen liegenden Hohlräumen entsteht.

Beim in Figur 1 dargestellten Ausführungsbeispiel besitzt die Gesteinskörnung 10 selbst entweder keine Porosität oder die Poren der Gesteinskörnung 10 sind durch das zementhaltige Bindemittel aufgefüllt. Hierdurch entstehen zwischen der Gesteinskörnung 10 Poren 30 im Haufwerk des Formkörpers 1. Die in Figur 1 dargestellte Struktur wird daher als Haufwerksporigkeit bezeichnet.

Figur 2 zeigt einen Querschnitt durch einen Formkörper 1 gemäß einer zweiten Ausführungsform der Erfindung. Im Ausführungsbeispiel gemäß Figur 2 wird ein offenporiger anorganischer Festkörper als Gesteinskörnung 10 verwendet. Auch die Gesteinskörnung gemäß Figur 2 kann unterschiedliche Korngrößen aufweisen, so dass sich eine stabile Packung der Gesteinskörnung 10 im Formkörper 1 ergibt.

Das zementhaltige Bindemittel 20 füllt den Raum zwischen der Gesteinskörnung vollständig oder nahezu vollständig aus, so dass sich dort keine offenen Poren bilden. Jedoch bleiben die Poren der Gesteinskörnung 10, beispielsweise Blähglas, erhalten. Die in Figur 2 dargestellte Struktur wird daher als Korneigenporigkeit bezeichnet.

Im Ausführungsbeispiel gemäß Figur 3 ist ein Formkörper dargestellt, welcher eine Korneigen- und Haufwerksporigkeit aufweist. In diesem Fall dringt das Bindemittel 20 nicht vollständig in die Poren der Gesteinskörnung 10 ein, sondern lagert sich lediglich an deren Außenseite ab. Dadurch bleibt die Korneigenporigkeit der Gesteinskörnung 10 erhalten.

Zusätzlich füllt das Bindemittel die Zwischenräume zwischen den Körnern der Gesteinskörnung nicht vollständig aus, so dass Hohlräume 30 im Inneren des Formkörpers 1 entstehen können. Dadurch ist auch die anhand von Figur 1 erläuterte Haufwerksporigkeit gegeben. Das Bindemittel führt an den Berührungsstellen benachbarter Körner der Gesteinskörnung 10 zu einer haftenden Verbindung, so dass auch der Formkörper 1 gemäß Figur 3 in gewissen Grenzen Druck- und Zugspannungen aufnehmen kann.

Die Struktur des Formkörpers kann beispielsweise durch Auswahl der Menge des Bindemittels, durch die Mischzeit von Bindemittel und Gesteinskörnung, durch den Pressdruck in der Form und/oder die Korngröße der Gesteinskörnung 10 eingestellt werden, so dass die Porigkeit und/oder die Dichte des Formkörpers bestmöglich auf den jeweiligen Anwendungsfall angepasst werden kann.

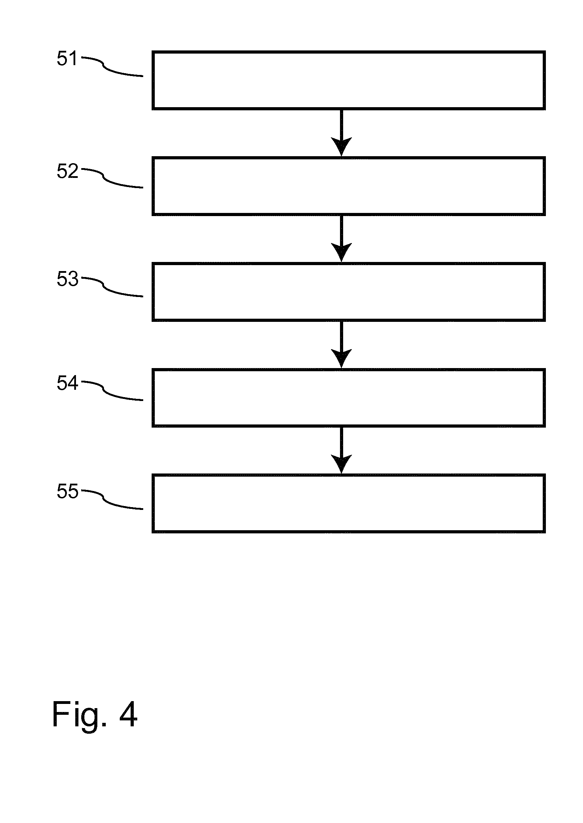

Figur 4 zeigt ein Flussdiagramm des erfindungsgemäßen Verfahrens. Im ersten Verfahrensschritt 51 wird eine Trockenmischung durch Mischen von zumindest einer Gesteinskörnung und zumindest einem Zement hergestellt. Die Trockenmischung kann beispielsweise mit einem Pflugscharmischer durchmischt werden. Die Mischzeit kann in einigen Ausführungsformen der Erfindung etwa 1 Minute bis etwa 6 Minuten betragen, insbesondere etwa 1,5 Minuten bis etwa 4,5 Minuten.

Im zweiten Verfahrensschritt 52 wird der im Verfahrensschritt 51 erhaltenen Trockenmischung Wasser zugesetzt. In einigen Ausführungsformen der Erfindung kann das Wasser-/Zementverhältnis etwa 0,8 bis etwa 1,1 betragen. Auch das Untermischen des Wassers im Verfahrensschritt 52 kann mit einem Pflugscharmischer erfolgen. Die erforderliche Wassermenge kann über einen Zeitraum von etwa 15 Sekunden bis etwa 5 Minuten zugegeben werden. Die Mischzeit im Verfahrensschritt 52 kann etwa 3 Minuten bis etwa 15 Minuten betragen, um eine homogene Durchmischung aller Bestandteile zu ermöglichen.

Optional kann in diesem Verfahrensschritt zumindest ein zusazmittel oder -stoff zusammen mit dem Wasser oder danach beigefügt werden, beispielsweise ein Schaumbildner, ein Porenbildner, ein Verzögerer, ein Fließverbesserer und/oder ein Beschleuniger.

Im Verfahrensschritt 53 wird die im Verfahrensschritt 52 erhaltene Mischung in eine Form eingefüllt. Je nach verwendeter Form kann der vorgeschlagene Formkörper die Form eines Massivsteines, eines Hohlblocksteines oder einer Leichtbauplatte annehmen. Zur Erhöhung der Zugfestigkeit kann in die Form eine Armierung eingelegt werden, welche beispielsweise aus Glasfasern, aus Stahl, Baumwollfasern, Kohlefasern und/oder anderen, an sich bekannten Materialien bestehen kann.

In einigen Ausführungsformen der Erfindung kann das Füllen der Form im Verfahrensschritt 53 dadurch erleichtert werden, dass die Mischung in die Form eingerüttelt und/oder in der Form axial oder isostatisch gepresst wird. In letzterem Fall kann der Pressdruck zwischen etwa 0,15 MPa und etwa 0,3 MPa betragen. Die Wahl des Pressdruckes kann dabei die Struktur des entstehenden Formkörpers bzw. dessen Porosität beeinflussen.

Im Verfahrensschritt 54 härtet der Zement hydraulisch ab, wobei die Festigkeit des Formkörpers zunimmt. Der Formkörper wird für eine vorgebbare Zeitspanne bis zum Erreichen einer Anfangsfestigkeit in der Form belassen oder ohne Form hergestellt, z.B. in einem Extrusionsverfahren, oder nur kurzzeitig geschalt, wie z.B. erdfeuchte Pflastersteinbetone.

Nach Ablauf des Verfahrensschrittes 54 wird der Formkörper im Verfahrensschritt 55 ausgeformt. Je nach Dauer des Verfahrensschrittes 54 kann der im Verfahrensschritt 55 erhaltene Formkörper sofort gebrauchsfähig sein. In anderen Ausführungsformen der Erfindung weist der Formkörper erst die zur Ausformung erforderliche Festigkeit auf, so dass der Formkörper nach dem Ausformen im Verfahrensschritt 55 noch gelagert werden muss, bis das hydraulisch härtende Bindemittel die größtmögliche Festigkeit erreicht hat und/oder der Formkörper vollständig getrocknet ist. Dies kann in einigen Ausführungsformen der Erfindung nach 28 Tagen der Fall sein.

### Ausführungsbeispiel 1

Im ersten Ausführungsbeispiel werden 290 g eines offenporigen, geblähten Glasgranulates der Korngröße 2 - 4 mm, sowie 1080 g eines offenporigen, geblähten Glasgranulates der Korngröße 0,5 - 1 mm als Zuschlag verwendet. Das Gesamtschüttvolumen der verwendeten Gesteinskörnung beträgt 5000 ml. Die Korngröße wurde jeweils nach DIN 18123-4 durch Trockensiebung ermittelt. Zudem wird 562,5 g eines Zementes zugegeben.

Das offenporige, geblähte Glasgranulat besteht aus recyceltem Altgas mit einer geschlossenen Gitterstruktur. Zum Schäumen wird in die flüssige Schmelze entweder Kohlendioxid eingeblasen oder das Gemisch mit Kohlestaub versetzt, welcher nachfolgend zu CO₂ oxidiert wird. Hierbei entstehen kleine Blasen in der Schmelze, welche nach dem Erkalten eine Korneigenporosität des Zuschlags bewirken.

Die beiden Gesteinskörnungen unterschiedlicher Korngröße und der Zement werden in einem Pflugscharmischer während 90 Sekunden trocken vermengt. Die Dauer bestimmt dabei maßgeblich die Verteilung des Zementes und daraus resultierend neben der Menge des Zementes die Porosität des entstehenden Formkörpers.

Nachdem aus Gesteinskörnung und Zement eine Trockenmischung hergestellt ist, werden 562,5 g Wasser über einen Zeitraum von 60 Sekunden zugegeben. Nach der vollständigen Zugabe des Wassers wird die Mischung weitere 3 Minuten durchmischt, um eine homogene Verteilung von Gesteinskörnung, Wasser und Bindemittel zu bewirken.

Die erhaltene Mischung wird in Formen gefüllt und zu einer Platte von 39 mm Dicke verdichtet.

Nach dem hydraulischen Abbinden des Zementes und Trocknung an Luft, wobei überschüssiges Wasser entweichen kann, weist der entstandene Formkörper ein haufwerksporiges Gefüge mit einer Rohdichte von ca. 387 kg/m³ auf. Die Druckfestigkeit des Formkörpers nach 28 Tagen Aushärtezeit beträgt etwa 1,8 MPa. Die Druckfestigkeit wird nach DIN 196-1 ermittelt.

Der Schallabsorptionsgrad α für einschichtigen Aufbau beträgt etwa 0,3 bei 500 Hz, etwa 0,6 bei 1000 Hz und etwa 0,4 bei 1500 Hz. Die Messung erfolgte bei allen Frequenzen bei senkrechtem Schalleinfall nach ISO 10534-2:1998. Damit eignet sich der entstandene Formkörper als Schallabsorber, welcher die Schallreflexion und die Nachhallzeit in einem Raum positiv beeinflussen kann. Gleichzeitig ist der Formkörper anders als bekannte Hartschäume oder organisch gebundene Materialien unbrennbar und durch die hohe Druckfestigkeit auch als alleiniges Wandmaterial einsetzbar.

### Ausführungsbeispiel 2

Im zweiten Ausführungsbeispiel werden 380 g, entsprechend 1000 ml loses Schüttvolumen eines offenporigen, geblähten Glasgranulates der Korngröße 0 bis 0,5 mm sowie 82 g eines Zementes in einem Pflugscharmischer trocken vermengt.

Nach 60 Sekunden werden der so entstandenen Trockenmischung 82 g Wasser über einen Zeitraum von 30 Sekunden zugegeben.

Danach wird die Mischung für weitere 5 Minuten vermischt, ehe die Mischung in Formen gefüllt und auf eine Dicke von 32 mm verdichtet wird.

Nach hydraulischem Abhärten des Zementes und Trocknung an Luft weist auch dieser Formkörper ein haufwerksporiges Gefüge mit einer Rohdichte von ca. 480 kg/m³ auf. Der Schallabsorptionsgrad α nach ISO 10534-2:1998 für einen einschichtigen Aufbau beträgt bei 500 Hz etwa 0,2. Der Schallabsorptionsgrad bei 1000 Hz etwa 0,4 und der Schallabsorptionsgrad bei 1500 Hz ebenfalls etwa 0,4. Die 28 Tage Druckfestigkeit des erhaltenen Formkörpers liegt bei 1,7 MPa.

### Ausführungsbeispiel 3

Im dritten Ausführungsbeispiel werden 1290 g eines offenporigen, geblähten Tongranulates der Korngröße 2 bis 4 mm mit einem losen Schüttvolumen von 2700 ml mit 204 g eines Weißzementes in einem Pflugscharmischer trocken vermengt. Auch dieser Trockenmischung werden nach 60 Sekunden 174 g Wasser über einen Zeitraum von 30 Sekunden zugegeben.

Nachdem die Mischung 3 Minuten gerührt wurde, wird die erhaltene Mischung in Formen gefüllt und auf eine Dicke von 29 mm verdichtet.

Nach hydraulischem Abhärten des Zementes und Trocknung an Luft weist der entstandene Formkörper ein haufwerksporiges Gefüge auf. Die Rohdichte beträgt etwa 553 kg/m³. Der Schallabsorptionsgrad α bei 500 Hz beträgt etwa 0,7, bei 1000 Hz etwa 0,1 und bei 1500 Hz etwa 0,3 nach ISO 10534-2:1998 für einen einschichtigen Aufbau. Auch diese Werte wurden bei senkrechtem Schalleinfall gemessen, wobei eine Luftschicht von 5 cm zwischen dem Formkörper und dem Sensor vorhanden war. Die 28 Tage Druckfestigkeit liegt bei etwa 0,6 MPa.

### Ausführungsbeispiel 4

Im vierten Ausführungsbeispiel werden 608 g eines offenporigen, geblähten Tongranulates der Korngröße 0,1 bis 0,5 mm mit 180 g eines Zementes in einem Pflugscharmischer trocken vermengt. Dieser Trockenmischung werden nach 60 Sekunden 180 g Wasser über einen Zeitraum von 20 Sekunden zugegeben.

Nachdem die Mischung 5 Minuten vermischt wurde, wird die erhaltene Mischung in Formen gefüllt und auf eine Dicke von 43 mm verdichtet.

Nach hydraulischem Abhärten des Zementes und Trocknung an Luft weist der entstandene Formkörper ein haufwerksporiges Gefüge auf. Die Rohdichte beträgt etwa 505 kg/m³. Die 28 Tage Druckfestigkeit liegt bei etwa 1,9 MPa.

Für einen einschichtigen Aufbau beträgt der Schallabsorptionsgrad α nach ISO 10534-2:1998 bei 500 Hz etwa 0,3, bei 1000 Hz etwa 0,3 und bei 1500 Hz etwa 0,4.

### Ausführungsbeispiel 5

Im fünften Ausführungsbeispiel werden 219 g eines offenporigen, geblähten Tongranulates der Korngröße 2 bis 4 mm mit 82 g eines Zementes in einem Pflugscharmischer trocken vermengt. Dieser Trockenmischung werden nach 60 Sekunden 82 g Wasser über einen Zeitraum von 20 Sekunden zugegeben.

Nachdem die Mischung 5 Minuten vermischt wurde, wird die erhaltene Mischung in Formen gefüllt und auf eine Dicke von 25,5 mm verdichtet.

Nach hydraulischem Abhärten des Zementes und Trocknung an Luft weist der entstandene Formkörper ein haufwerksporiges Gefüge auf. Die Rohdichte beträgt etwa 329 kg/m³. Die 28 Tage Druckfestigkeit liegt bei etwa 1,04 MPa.

Für einen einschichtigen Aufbau beträgt der Schallabsorptionsgrad α nach ISO 10534-2:1998 bei 500 Hz etwa 0,1, bei 1000 Hz etwa 0,2 und bei 1500 Hz etwa 0,5.

Die erfindungsgemäß vorgeschlagenen Formkörper bestehen ausschließlich aus anorganischen Bindemitteln und Gesteinskörnungen, so dass diese schwer entflammbar sind und in eine bessere Brandschutzklasse fallen als bisher bekannte Absorber, welche mit Epoxidharz gebunden sind.

Bedingt durch das geringe Schwinden und Quellen des vorgeschlagenen Formkörpers kann dieser fugenlos verlegt werden, was neben Einsparungen bei der Montage auch ästhetische Vorteile mit sich bringt. Der erfindungsgemäße Formkörper kann einfach aus kostengünstigen und leicht verfügbaren Rohstoffen hergestellt werden. Hierdurch ist eine großflächige Installation, beispielsweise in Produktionshallen, Konzert- oder Theatersälen möglich. Durch die Wahl der Korngröße der Gesteinskörnung kann in einigen Ausführungsformen der Erfindung eine glatte Oberfläche des Formkörpers bereitgestellt werden, so dass eine nachträgliche optische Aufwertung durch Stoffbespannung oder Verputzen verzichtbar ist, so dass die Montage in einem Gebäude schnell und einfach erfolgen kann. Da der vorgeschlagene Formkörper aus einem betonähnlichen Baustoff besteht, kann dieser leicht mit anderen Bauteilen, kombiniert werden, welche entweder als Betonfertigteil oder in Ortbeton hergestellt sind.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern ,erste' und 'zweite' Merkmale bzw. Ausführungsbeispiele erwähnt werden, stellt dies keine Rangfolge dar, sondern dient der Unterscheidung gleichartiger Merkmale.

## Patentansprüche

1. Formkörper (1) aus einem Leichtwerkstoff, enthaltend zumindest eine Gesteinskörnung (10) und ein Bindemittel (20), **dadurch gekennzeichnet, dass**
das Bindemittel (20) Hydrationsprodukte zumindest eines Zementes enthält, und
der Formkörper eine Korneigenporigkeit und/oder eine Haufwerksporigkeit aufweist, und
der Formkörper einen Schallabsorptionsgrad (α) nach ISO 10534-2:1998 von etwa 0,1 bis etwa 0,8 aufweist.

2. Formkörper nach Anspruch 1, **dadurch gekennzeichnet, dass** die Gesteinskörnung (10) einen offenporigen anorganischen Festkörper enthält.

3. Formkörper nach einem der Ansprüche 1 oder 2, **dadurch gekennzeichnet, dass** die Gesteinskörnung (10) eine Korngröße von etwa 0,1 mm bis etwa 0,5 mm und/oder von etwa 0,5 mm bis etwa 1 mm und/oder von etwa 2 mm bis etwa 4 mm und/oder von etwa 1 mm bis etwa 2 mm aufweist.

4. Formkörper nach einem der Ansprüche 1 bis 3, **dadurch gekennzeichnet, dass** die Gesteinskörnung (10) Blähglas und/oder Perlit und/oder Bims und/oder Schaumlava und/oder Blähschiefer und/oder Mineralschaum und/oder Blähton und/oder Silicate und/oder Kieselgur enthält oder daraus besteht.

5. Formkörper nach einem der Ansprüche 1 bis 4, **dadurch gekennzeichnet, dass** die Dichte etwa 100 kg/m³ bis etwa 800 kg/m³ oder etwa 150 kg/m³ bis etwa 700 kg/m³ oder etwa 350 kg/m³ bis etwa 560 kg/m³ beträgt.

6. Formkörper nach einem der Ansprüche 1 bis 5, **dadurch gekennzeichnet, dass** die Druckfestigkeit etwa 0,1 MPa bis etwa 5,0 MPa oder etwa 0,2 MPa bis etwa 3 MPa oder etwa 0,6 MPa bis etwa 1,9 MPa beträgt.

7. Formkörper nach einem der Ansprüche 1 bis 6, **dadurch gekennzeichnet, dass** der Anteil der Gesteinskörnung (10) etwa 40 bis etwa 90 Gew.-% und der Anteil des Bindersystems etwa 10 bis etwa 60 Gew.-% beträgt oder dass der Anteil der Gesteinskörnung (10) etwa 50 bis etwa 80 Gew.-% und der Anteil des Bindersystems etwa 50 bis etwa 20 Gew.-% beträgt.

8. Formkörper nach einem der Ansprüche 1 bis 7, **dadurch gekennzeichnet, dass** der Schallabsorptionsgrad (α) an einem einschichtigem Aufbau des Formkörpers bestimmt ist.

9. Formkörper nach einem der Ansprüche 1 bis 8, **dadurch gekennzeichnet, dass** das Bindemittel (20) weiterhin zumindest einen Schaumbildner enthält oder dass das Bindemittel (20) weiterhin zumindest ein Tensid und/oder Aluminiumpulver enthält.

10. Formkörper nach einem der Ansprüche 1 bis 9, **dadurch gekennzeichnet, dass** die Oberfläche der Gesteinskörnung (10) nicht vollständig mit Bindemittel (20) bedeckt ist.

11. Formkörper nach einem der Ansprüche 1 bis 10, **dadurch gekennzeichnet, dass** der Formkörper eine Dicke von etwa 25 mm bis etwa 50 mm aufweist.

12. Verfahren zur Herstellung eines Formkörpers enthaltend die folgenden Schritte:
- Herstellen (51) einer Trockenmischung durch Mischen von zumindest einer Gesteinskörnung (10) und Zement,
- Zugeben (52) von Wasser zur Trockenmischung,
- Einfüllen (53) der erhaltenen Mischung in zumindest eine Form,
- einrütteln und/oder axiales oder isostatisches Pressen der Mischung in der Form,
- hydraulisches (54) Abhärten des Zementes, so dass ein Formkörper mit einer Korneigenporigkeit und/oder einer Haufwerksporigkeit entsteht.

13. Verfahren nach Anspruch 12, **dadurch gekennzeichnet, dass** der Anteil der Gesteinskörnung (10) an der Trockenmischung etwa 40 bis etwa 90 Gew.-% und der Anteil des Bindersystems an der Trockenmischung etwa 10 bis etwa 60 Gew.-% beträgt oder dass der Anteil der Gesteinskörnung (10) etwa 50 bis etwa 80 Gew.-% und der Anteil des Bindersystems etwa 20 bis etwa 50 Gew.-% beträgt.

14. Verfahren nach einem der Ansprüche 12 bis 13, **dadurch gekennzeichnet, dass** das Wasser-/Zementverhältnis etwa 0,3 bis etwa 1,5 beträgt.

15. Verwendung eines Formkörpers nach einem der Ansprüche 1 bis 11 als Schallabsorber oder als Wärmedämmung.
